# EUROPEAN PATENT APPLICATION

(11) **EP 3 043 306 A1**
(43) Date of publication of application: **13.07.2016**
(21) Application number: 15780756.1
(22) Date of filing: 08.10.2015
(51) Int. Cl.: G06Q 20/40, G06Q 40/02, H04W 12/06

(54) **SYSTEM FOR CONVENIENT PERSON AUTHENTICATION USING MOBILE COMMUNICATION TERMINAL AND ACTUAL FINANCIAL CARD AND METHOD THEREFOR**

(30) Priority: 08.10.2014 KR 20140136009
(71) Applicant: Hankooknfc Inc., Seoul 06643 (KR)
(72) Inventor: SONG, Sung Un, Seoul 08866 (KR)
(74) Representative: Vossius & Partner Patentanwälte Rechtsanwälte mbB
(86) International application number: PCT/KR2015/010638
(87) International publication number: WO 2016/056853

(57) **Abstract**

Provided are a user authentication system and method using a physical financial card. A user of the physical financial card is authenticated based on information acquired from the physical financial card using a contact or non-contact scheme. When a user requesting authentication for the first time is successfully authenticated, a unique identifier (UID) of the physical financial card and a personal identification number (PIN) for the authentication are registered. The user is authenticated using the registered UID and PIN information in the next authentication, so that security and convenience are improved.

## Description

### CROSS-REFERENCE TO RELATED APPLICATION

This application claims priority to and the benefit of Korean Patent Application No. 2014-0136009, filed on October 8, 2014, the disclosure of which is incorporated herein by reference in its entirety.

### BACKGROUND

### 1. Field of the Invention

The present invention relates to an authentication system and method, and more particularly, to a user authentication system and method using a physical financial card and a mobile communication terminal that can easily perform face-to-face card authentication based on direct contact or proximity (hereinafter referred to as "non-contact") of a financial card possessed by a user using near field communication (NFC) of the mobile communication terminal and easily perform user authentication while improving security of user authentication without exposure of card information using a unique identifier (UID) and a personal identification number (PIN) of the financial card.

### 2. Discussion of Related Art

At present, with the development of wired/wireless communication technology and the development of mobile communication terminals capable of accessing a wired/wireless communication network anytime and anywhere, ubiquitous computing environments are being constructed.

The ubiquitous computing environments being constructed enable a large number of transactions previously performed offline to be performed online. Representative online transactions may be Internet banking and mobile banking of banks, issuance of a resident registration by a public authority, online payment of a shopping mall or the like, etc.

However, in order to perform any transaction online, it should be determined that a subject of the transaction is authentic.

Because it is necessary to authenticate such a subject, that is, a user, various user authentication schemes are being developed and applied. The user authentication schemes may be a knowledge-based authentication scheme, a biometric-based authentication scheme, a possession-based authentication scheme, etc.

The knowledge-based authentication scheme includes an ID and password authentication scheme, a PIN authentication scheme, an Internet PIN (i-PIN) authentication scheme, etc.

The biometric-based authentication scheme includes authentication schemes using fingerprint, voice, iris, and vein recognition, etc.

The possession-based authentication scheme includes a one-time password (OTP) authentication scheme, a short message service (SMS) approval number authentication scheme using a mobile communication terminal such as a cellular phone, a mobile phone, or a smartphone, an automatic response system (ARS) authentication scheme, etc.

Among these authentication schemes, the possession-based authentication scheme is widely applied because of high security. However, there is a problem in that a wired/wireless phone regarded as a possession of the user may be stolen at the time of authentication in the case of the ARS authentication scheme, a password may be stolen when lost in the case of the OTP authentication scheme, and an approval number may be leaked through memory hacking in SMS authentication using the mobile communication terminal.

Accordingly, there is a need for an authentication scheme capable of easily performing authentication with more powerful security.

### SUMMARY OF THE INVENTION

The present invention provides a user authentication system and method using a physical financial card and a mobile communication terminal that may easily perform face-to-face card authentication of a financial card possessed by a user using near field communication (NFC) of the mobile communication terminal for non-face-to-face user authentication online and easily perform user authentication while improving security of the user authentication without exposure of card information using a unique identifier (UID) and a personal identification number (PIN) of the financial card.

According to an aspect of the present invention, there is provided an authentication method including receiving an authentication request signal including a UID and first card information of a financial card and first personal information about a user of the financial card, determining whether the user identified by the UID is a pre-registered user, authenticating and registering the user based on the UID and the first card information when a determination result indicates that the user is not registered, and authenticating the user based on the UID when the determination result indicates that the user is pre-registered.

According to an aspect of the present invention, there is provided an authentication method using a terminal, the authentication method including acquiring a UID and first card information from a physical financial card using a contact or non-contact scheme, acquiring first personal information including a name of a user of the financial card, transmitting an authentication request signal including the first personal information, the UID, and the first card information, receiving a previous-registration notification signal or a non-registration notification signal as a response to the transmission of the authentication request signal, performing an unregistered user authentication procedure when the non-registration notification signal is received, and performing a pre-registered user authentication procedure when the previous-registration notification signal is received.

According to an aspect of the present invention, there is provided an authentication server including an authentication request processing unit configured to receive an authentication request signal including a UID and first card information, of a financial card and first personal information of a user of the financial card and determine whether the user identified by the UID is a registered user, an unregistered user authenticating unit configured to authenticate and register the user based on the UID and the first card information when a determination result of the authentication request processing unit indicates that the user is not registered, and a pre-registered user authenticating unit configured to authenticate the user based on the UID when the determination result of the authentication request processing unit indicates that the user is pre-registered.

According to an aspect of the present invention, there is provided an authentication terminal using a physical financial card, the authentication terminal including a first card information acquiring unit configured to acquire a UID and first card information from the physical financial card using a contact or non-contact scheme, a first personal information acquiring unit configured to acquire first personal information including a name of a user of the physical financial card, an authentication requesting unit configured to transmit an authentication request signal including the first personal information, the UID, and the first card information, a registration notification receiving unit configured to receive a previous-registration notification signal or a non-registration notification signal as a response to the transmission of the authentication request signal, an unregistered user authentication processing unit configured to perform an unregistered user authentication procedure when the non-registration notification signal is received, and a pre-registered user authentication processing unit configured to perform a pre-registered user authentication procedure when the previous-registration notification signal is received.

The present invention has an advantageous effect in that security can be improved by performing face-to-face authentication of a financial card based on the financial card possession according to financial card information of the financial card possessed by a user acquired without contact using NFC of the mobile communication terminal.

Also, the present invention has an advantageous effect in that security can be improved because validity of the financial card is found and encryption communication of card information is performed using a secure application module (SAM) when the card information of the financial card is acquired for face-to-face authentication of the financial card.

Also, the present invention has an advantageous effect in that security can be improved without a user's intervention because at least two of a user authentication server, a mobile communication terminal, and a financial company server perform authentication for a user authentication request generated from any service server according to whether a phone number of a mobile communication terminal of the user input from the service server matches a pre-registered phone number.

Also, the present invention has an advantageous effect in that authentication may be easily performed from the viewpoint of the user while security is improved by minimizing the exposure of card information on a network with possession identification of a physical financial card because it is possible to perform authentication by registering a UID of a financial card and a PIN for the UID along with face-to-face authentication of the possessed physical financial card and merely inputting the UID and the PIN read without contact from the physical financial card to the mobile communication terminal of the user without using important card information such as a card number, a valid period, etc. at the time of user authentication.

### BRIEF DESCRIPTION OF THE DRAWINGS

The above and other objects, features and advantages of the present invention will become more apparent to those of ordinary skill in the art by describing in detail exemplary embodiments thereof with reference to the accompanying drawings, in which:
FIG. 1 is a configuration diagram of an authentication system according to an exemplary embodiment of the present invention;
FIGS. 2 to 4 are configuration diagrams of a user terminal according to an exemplary embodiment of the present invention;
FIG. 5 is a configuration diagram of an authentication server according to an exemplary embodiment of the present invention;
FIG. 6 is a signal-sequence diagram of an authentication method for an unregistered user according to an exemplary embodiment of the present invention; and
FIG. 7 is a signal-sequence diagram of an authentication method for a pre-registered user according to an exemplary embodiment of the present invention.

### DETAILED DESCRIPTION OF EXEMPLARY EMBODIMENTS

Advantages and characteristics of the present invention and a method for achieving them will be apparent with reference to embodiments described below in addition with reference to the accompanying drawings. However, the present invention is not limited to the exemplary embodiments described below but may be implemented in various forms. Therefore, the exemplary embodiments are provided to enable those skilled in the art to thoroughly understand the teaching of the present invention and to completely inform those skilled in the art of the scope of the present invention, and the present invention will only be defined by the scope of the appended claims. Throughout the specification, like elements refer to like reference numerals.

Unless otherwise defined, all terms (including technical and scientific terms) used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

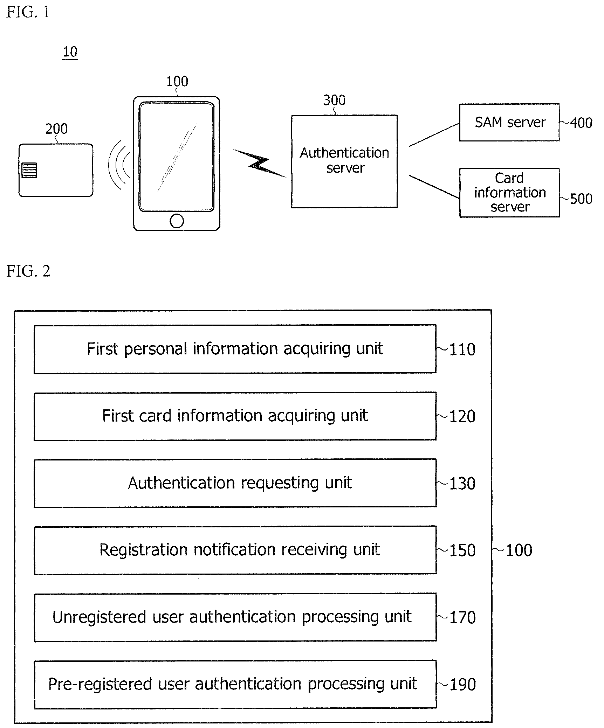

FIG. 1 is a configuration diagram of an authentication system according to an exemplary embodiment of the present invention.

Referring to FIG. 1, the authentication system 10 according to the exemplary embodiment of the present invention may include a user terminal 100, an authentication server 300, a secure application module (SAM) server 400, and a card information server 500.

The user terminal 100 is a terminal for performing user authentication using a financial card 200. The user terminal 100 may easily authenticate a user using the authentication server 300 based on information acquired from the (physical) financial card 200.

The user terminal 100 may be any one of a smartphone, a tablet computer, a laptop computer, a notebook computer, a personal computer (PC), a home-use game machine, and a television (TV) having a smart function, but is not limited thereto.

The financial card 200 may include at least one of a credit card, a debit card, a transportation card, and a prepaid card as an example but is not limited thereto.

The authentication server 300 receives an authentication request from the user terminal 100 and performs user authentication on the financial card 200 and the user terminal 100 based on information included in the authentication request.

When the user of the user terminal 100 accesses the authentication server 300 for the first time or is an unregistered user, the authentication server 300 authenticates and registers the user. When the user of the user terminal 100 is a pre-registered user, the authentication server 300 performs simple authentication. When the unregistered user is successfully authenticated, the authentication server 300 may store information about the unregistered user and personal identification number (PIN) information to register the user. When the registered user is authenticated, the authentication server 300 may perform simple authentication using stored PIN information.

The SAM server 400 may provide plaintext information by decrypting encrypted information of the financial card. According to the exemplary embodiment of the present invention, a card number and a valid period of the financial card to which an SAM function is applied are encrypted and the SAM server 400 may provide the card number and the valid period in plaintext by decrypting the encrypted card number and valid period when the encrypted card number and valid period are received.

The card information server 500 is a server configured to manage personal information and card information of the user of the financial card 200. For example, the card information server 500 may be a server of a card company issuing the financial card 200.

When personal identification authentication text including the card information is received, the card information server 500 may verify whether the personal identification authentication text and the card information are valid. When the verification result indicates that the personal identification authentication text and the card information are valid, the card information server 500 may find personal information of the user corresponding to the card information to provide the personal information along with the verification result.

According to an exemplary embodiment of the present invention, all communication between the user terminal 100, the authentication server 300, the SAM server 400, and the card information server 500 may be performed using a dedicated security network socket communication for security.

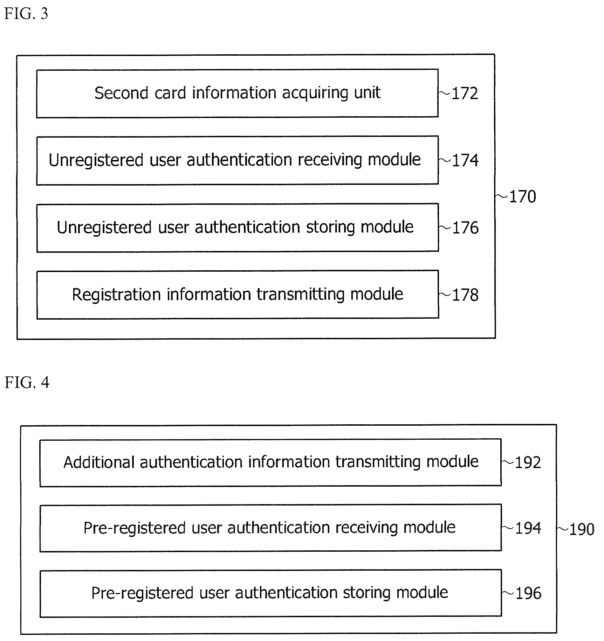

FIGS. 2 to 4 are configuration diagrams of a user terminal according to an exemplary embodiment of the present invention.

As illustrated in FIG. 2, the user terminal 100 according to the exemplary embodiment of the present invention may include a first personal information acquiring unit 110, a first card information acquiring unit 120, an authentication requesting unit 130, a registration notification receiving unit 150, an unregistered user authentication processing unit 170, and a pre-registered user authentication processing unit 190.

The first personal information acquiring unit 110 may acquire first personal information about the user of the user terminal 100. The first personal information may include a name of the user.

According to some exemplary embodiments of the present invention, the first personal information acquiring unit 110 may display a first personal information input user interface (UI) on a display means provided in the user terminal 100 and acquire the first personal information from the user through the first personal information input UI.

The first card information acquiring unit 120 may acquire a unique identifier (UID) and first card information from the financial card 200 through contact with or proximity to the financial card 200 or wireless communication with the financial card 200. The UID is identification information for distinguishing the financial card 200 from other financial cards and the first card information may include a card number and a valid period of the financial card 200.

For example, the user terminal 100 and the financial card 200 may support a near field communication (NFC) function and the user terminal 100 may acquire the card information from the financial card 200 when the financial card 200 is in contact with the user terminal 100.

The authentication requesting unit 130 may generate an authentication request signal including the acquired first personal information, UID, and first card information, transmit the authentication request signal to the authentication server 300, and request authentication on the user terminal 100 and the user of the financial card 200.

The registration notification receiving unit 150 may receive an unregistered user notification signal or a pre-registered user notification signal as a response to the authentication request signal transmitted by the authentication requesting unit 130. The unregistered user notification signal is a signal indicating that the user for which the authentication is requested is an unregistered user. The pre-registered user notification signal is a signal indicating that that the user for which the authentication is requested is a user registered in the authentication server 300.

The unregistered user authentication processing unit 170 may perform an authentication procedure for the unregistered user when the unregistered user notification signal is received.

According to an exemplary embodiment of the present invention, the unregistered user authentication processing unit 170 may include a second card information acquiring module 172, an unregistered user authentication receiving module 174, an unregistered user authentication storing module 176, and a registration information transmitting module 178.

The second card information acquiring module 172 may acquire second card information including a password or card validation code (hereinafter referred to as "CVC") of the financial card 200 and transmit the second card information as a response to the reception of a non-registration notification signal of the authentication server 300.

According to some exemplary embodiments of the present invention, the second card information acquiring module 172 may display a second card information input UI on the display means provided in the user terminal 100 and acquire the second card information from the user using the second card information input UI.

The unregistered user authentication receiving module 174 may receive an authentication success signal or an authentication failure signal as a response to the transmission of the second card information. The authentication failure signal indicates that the user authentication has failed and the authentication success signal indicates that the user authentication has succeeded.

When the authentication failure signal is received, the unregistered user authentication receiving module 174 may output a signal indicating the failure of the authentication to a notification means provided in the user terminal 100.

When the authentication success signal is received from the authentication server 300, the unregistered user authentication storing module 176 may store authentication success information included in the authentication success signal.

The authentication success signal may include a connecting information (CI) or duplication information (DI) authentication value. The CI authentication value is information for identifying the same user between different websites. The DI authentication value is an authentication value for uniquely identifying the user within only a website in which membership registration is desired or the right to write is desired to be obtained.

When the authentication success signal is received, the registration information transmitting module 178 may acquire terminal identification information and PIN information and transmit registration information including the acquired terminal identification information and PIN information to the authentication server 300.

The PIN information may include personal identification information input by the user. For example, the PIN information may include a password constituted of a combination of characters or numbers but is not limited thereto.

According to some exemplary embodiments of the present invention, the registration information transmitting module 178 may display a PIN information input UI on the display means provided in the user terminal 100 and acquire the PIN information input by the user using the PIN information input UI.

The registration information transmitting module 178 transmits the registration information, so that the user authentication procedure may end.

The pre-registered user authentication processing unit 190 may include an additional authentication information transmitting module 192, a pre-registered user authentication receiving module 194, and a pre-registered user authentication storing module 196.

The additional authentication information transmitting module 192 may acquire PIN information and terminal identification information and transmit additional authentication information including the acquired PIN information and terminal identification information as a response to the reception of a previous-registration notification signal to the authentication server 300.

The terminal identification information is identification information for distinguishing the user terminal 100 from other user terminals. For example, the terminal identification information may include any one of a serial number, a model number, a production lot number, or a combination thereof, but is not limited thereto.

According to some exemplary embodiments of the present invention, the additional authentication information transmitting module 192 may display a PIN information input UI on the display means provided in the user terminal 100 and acquire the PIN information input by the user using the PIN information input UI.

The pre-registered user authentication receiving module 194 may receive an authentication success signal or an authentication failure signal as a response to the transmission of the additional authentication information from the authentication server 300.

When the authentication success signal is received, the pre-registered user authentication storing module 196 may store authentication success information included in the authentication success signal. After the pre-registered user authentication storing module 196 stores the authentication success information, the authentication procedure may end.

When the pre-registered user authentication receiving module 194 receives the authentication failure signal, it is determined that the user authentication has failed and the authentication procedure may end. The pre-registered user authentication receiving module 194 stores the authentication success information, so that it is determined that the user authentication has succeeded and the authentication procedure may end.

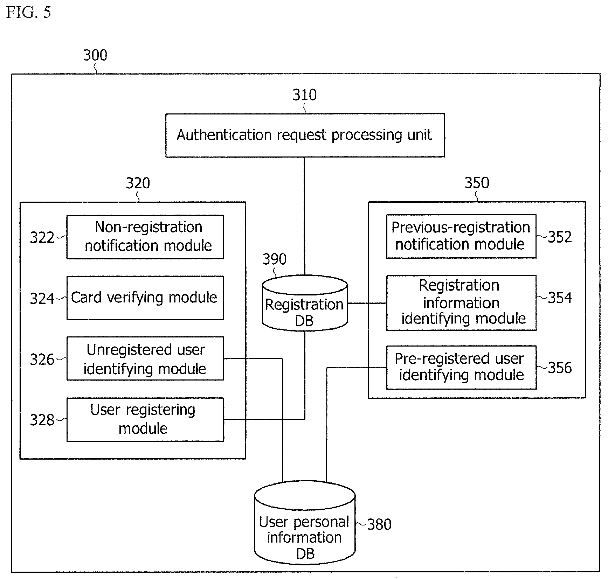

FIG. 5 is a configuration diagram of the authentication server 300 according to an exemplary embodiment of the present invention.

As illustrated in FIG. 5, the authentication server 300 according to the exemplary embodiment may include an authentication request processing unit 310, an unregistered user authenticating unit 320, a pre-registered user authenticating unit 350, a registration database (DB) 390, and a user personal information DB 380.

The registration DB 390 may be a DB storing terminal identification information and PIN information associated with a UID which is identification information of the financial card.

The user personal information DB 380 may be a DB storing third personal information. The third personal information is personal information for user authentication and may include a name and personal unique identification information. The third personal information may be pre-stored in the user personal information DB 380.

The authentication request processing unit 310 may receive an authentication request signal including the first personal information of the user and the UID and the first card information of the financial card and determine whether the user identified by the UID is a pre-registered user.

The UID is the identification information, but may be information for identifying the user of the financial card according to an exemplary embodiment of the present invention. The authentication server 300 performs authentication by associating only one financial card user with the UID. Accordingly, the UID may be information for identifying the user.

When the determination result of the authentication request processing unit 310 indicates that the user is not registered, the unregistered user authenticating unit 320 may authenticate the user based on the first personal information, the UID, and the first card information.

According to an exemplary embodiment of the present invention, the unregistered user authenticating unit 320 may include a non-registration notification module 322, a card verifying module 324, an unregistered user identifying module 326, and a user registering module 328.

The non-registration notification module 322 may transmit a non-registration notification signal as a response to the reception of the authentication request signal to the user terminal 100. The non-registration notification module 322 may receive the second card information as a response to the transmission of the non-registration notification signal from the user terminal 100.

The second card information may include a password or CVC of the financial card 200.

The card verifying module 324 may transmit first personal identification authentication text including the first card information, the second card information, and the UID to the card information server 500 and receive a personal identification result including the second personal information as a response to the transmission of the first personal identification authentication text from the card information server 500.

The first personal identification authentication text may include the first personal information, the first card information, the second card information, and the UID and additionally include at least one of a user authentication service member ID of a customer company, an application ID or a module ID, a user authentication service authentication ID of a user authentication authority, information indicating a text format, and information indicating whether an SAM is applied.

The second personal information may indicate personal information about a user possessing a card identified by the first card information, the second card information, and the UID. The second personal information may include a name and personal unique identification information of the user. The personal unique identification information may be a resident registration number, a passport number, a social security number, or a driver's license number, but is not limited thereto.

The unregistered user identifying module 326 may compare the second personal information with the third personal information when the personal identification result indicates success. The third personal information may be found using the name of the second personal information from the user personal information DB 380. When the second personal information matches the third personal information, the authentication success signal including the authentication success information may be transmitted to the user terminal 100.

The unregistered user identifying module 326 may transmit the authentication failure signal to the user terminal 100 when the personal identification result indicates failure or when the comparison result indicates a mismatch.

The user registering module 328 may receive registration information including terminal identification information and PIN information as a response to the transmission of the authentication success signal from the user terminal 100. The user registering module 328 may store the terminal identification information and the PIN information in the registration DB 390 in association with the UID.

According to an exemplary embodiment of the present invention, the pre-registered user authenticating unit 350 may include a previous-registration notification module 352, a registration information identifying module 354, and a pre-registered user identifying module 356.

The previous-registration notification module 352 may transmit a previous-registration notification signal as a response to the reception of the authentication request signal to the user terminal 100 and receive additional authentication information including PIN information and terminal identification information as a response to the transmission of the previous-registration notification signal from the user terminal 100.

The registration information identifying module 354 may find registered terminal identification information and registered PIN information stored in association with the UID from the registration DB 390. The registration information identifying module 354 may determine whether the received terminal identification information matches the registered terminal identification information and whether the received PIN information matches the registered PIN information.

When the determination result indicates that both the terminal identification information and the PIN information match, the registration information identifying module 354 may transmit second personal identification authentication text including the first personal information, the UID, and information indicating whether the terminal identification information matches to the card information server 500. When the determination result indicates that both the terminal identification information and the PIN information do not match, the registration information, identifying module 354 may transmit the authentication failure signal to the user terminal 100.

The second personal identification authentication text may include the first personal information, the UID, and the information indicating whether the terminal identification information matches and additionally include at least one of a user authentication service member ID of a member company or a customer company, an application ID or a module ID, a user authentication service authentication ID of a user authentication authority, information indicating a text format, information indicating whether an SAM is applied, information indicating whether an alternative UID is generated, and information indicating the theft, loss, jailbreak, and rooting of a terminal.

The pre-registered user identifying module 356 may receive the personal identification result including the second personal information as a response to the transmission of the second personal identification authentication text from the card information server 500.

The pre-registered user identifying module 356 may compare the second personal information with the third personal information when the personal identification result indicates success. The third personal information may be found using the user's name included in the second personal information from the user personal information DB 380. When the second personal information matches the third personal information, the authentication success signal including the authentication success information may be transmitted to the user terminal 100.

The pre-registered user identifying module 356 may transmit the authentication failure signal to the user terminal 100 when the personal identification result indicates failure or when the comparison result indicates a mismatch.

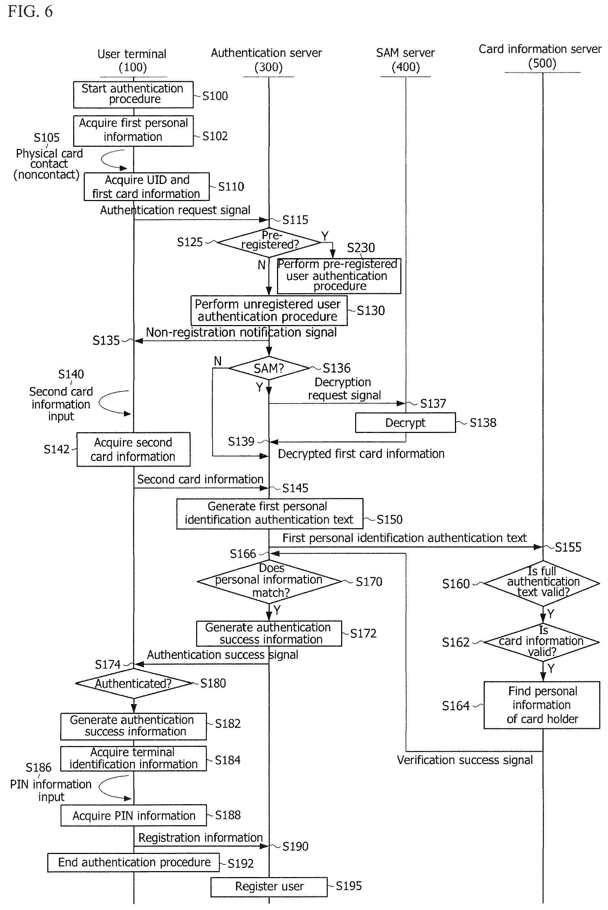

FIG. 6 is a signal-sequence diagram of an authentication method for an unregistered user according to an exemplary embodiment of the present invention.

The authentication method for the unregistered user according to the exemplary embodiment of the present invention will be described in detail with reference to FIG. 6.

When the authentication procedure starts in the user terminal 100 (S 100), an authentication UI may be displayed on the display means of the user terminal 100.

The user terminal 100 acquires first personal information of the user from the user of the user terminal 100 (S102). The first personal information may include a name of the user.

The user of the user terminal 100 brings the physical financial card in contact with or in proximity to the user terminal (S105). For example, when the user terminal 100 and the financial card support NFC, the financial card may be in contact with or in proximity to the user terminal 100 for the exchange of information.

The user terminal 100 acquires a UID and first card information from the financial card (S110) and transmits an authentication request signal including the UID and the first card information to the authentication server 300 (S 115). The first card information may include a card number and a valid period of the financial card.

The authentication server 300 determines whether the user is a pre-registered user based on the UID (S125). The authentication server 300 may determine that the user is a pre-registered user when the UID is found in the registration DB managed by the authentication server 300 and determine that the user is an unregistered user when the UID is not found in the registration DB.

The authentication server 300 performs a pre-registered user authentication procedure when it is determined that the user is the pre-registered user (S230) and performs an unregistered user authentication procedure when it is determined that the user is the unregistered user (S130).

The authentication server 300 transmits a non-registration notification signal to the user terminal 100 (S 135).

The authentication server 300 identifies whether the first card information is encrypted in an SAM scheme (S130). When it is identified that the first card information is encrypted in the SAM scheme, the authentication server 300 transmits a decryption request signal including the first card information to the SAM server 400(S137).

The SAM server 400 decrypts the first card information (S138). The SAM server 400 transmits the decrypted first card information to the authentication server 300(S139).

When the non-registration notification signal is received, the user terminal 100 may provide a second card information input UI to the user.

When second card information including a password or CVC of the financial card is input from the user (S140), the user terminal 100 acquires the second card information (S 142) and transmits the second card information to the authentication server 300 (S145).

The authentication server 300 generates first personal identification authentication text including the first personal information, the first card information, the second card information, and the UID (S150) and transmits the first personal identification authentication text to the card information server 500 (S155).

The card information server 500 verifies the validity of the first personal identification authentication text (S160). The card information server 500 may check for forgery or falsification of the first personal identification authentication text. For example, the card information server 500 may verify whether the first personal identification authentication text is forged or falsified.

The card information server 500 verifies the validity of the card information included in the first personal identification authentication text (S162). The card information indicates the UID, the first card information, and the second card information included in the first personal identification authentication text. For example, the card information server 500 may include a card information DB for storing card information and the card information server 500 may find card information indicated by the UID, the first card information, and the second card information from the card information DB and determine whether that the card information is valid when the card information is found.

When the first personal identification authentication text and the card information are valid, the card information server 500 finds second personal information of a card holder indicated by the card information (S164). For example, the card information server 500 may find the second personal information from a card holder DB provided in the card information server 500. The second personal information may include the name and personal unique identification information of the user.

When the second personal information is found, the card information server 500 transmits a verification success signal including the found second personal information to the authentication server 300 (S166). The card information server 500 may transmit a verification failure signal to the authentication server 300 when the first personal identification authentication text or the card information included in the first personal identification authentication text is not valid.

When the verification success signal is received, the authentication server 300 determines whether the second personal information included in the verification success signal matches third personal information found from the user personal information DB (S170). For example, when the user name of the second personal information is "Tom" and the personal unique identification information is "A01," the authentication server 300 may determine that the second personal information matches the third personal information if the third personal information of "Tom" is found from the user personal information DB and the personal unique identification information of the found third personal information is "A01."

When it is determined that the personal information matches, the authentication server 300 generates authentication success information (S 172). The authentication success information may be an authentication value indicating that the user authentication has succeeded. For example, the authentication success information may include a CI or DI authentication value.

The authentication server 300 transmits an authentication success signal including the authentication success information to the user terminal 100 (S 174).

When the authentication success signal is received, the user terminal 100 re-identifies whether the authentication has succeeded (S180). When it is determined that the authentication has succeeded, the user terminal 100 stores the authentication success information included in the authentication success signal (S182). The user terminal 100 acquires terminal identification information (S184). The terminal identification information is unique identification information indicating the user terminal 100. The user terminal 100 receives an input of PIN information from the user (S186) and acquires the PIN information (S 188).

The user terminal 100 transmits registration information including the acquired terminal identification information and PIN information to the authentication server 300 (S190) and ends the authentication procedure (S192).

When the registration information is received, the authentication server 300 registers the user (S195). The authentication server 300 may register the user by storing the terminal identification information and the PIN information included in the registration information in the registration DB in association with the UID. For example, the UID, the terminal identification information, and the PIN information may be stored as one row value in the registration DB.

Although not illustrated in FIG. 6, the authentication server 300 may transmit the authentication failure signal to the user terminal 100 when the verification failure signal is received from the card information server 500 or when it is determined that the personal information does not match. When the authentication failure signal is received, the user terminal 100 may determine that the user authentication has failed and end the authentication procedure.

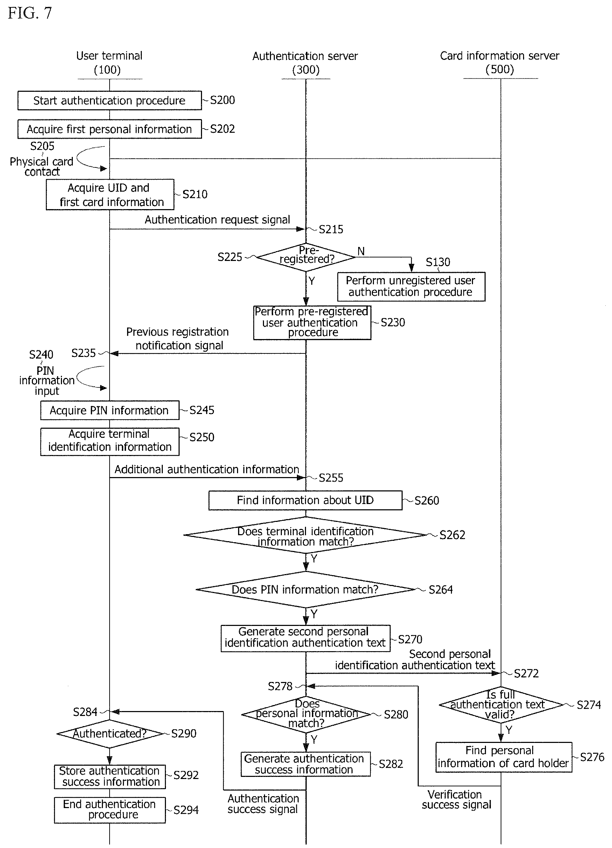

FIG. 7 is a signal-sequence diagram of an authentication method for a pre-registered user according to an exemplary embodiment of the present invention.

The authentication method for the pre-registered user according to the exemplary embodiment of the present invention will be described in detail with reference to FIG. 7.

Processes in which the user terminal 100 starts an authentication procedure (S200) and determines whether a user is a pre-registered user (S225) are the same as those of S100 to S 125 illustrated in FIG. 6. Accordingly, detailed description of the same process will be omitted to avoid redundant description.

The authentication server 300 determines whether the user is the pre-registered user based on the UID (S225), and performs a pre-registered user authentication procedure when the determination result indicates that the user is the pre-registered user (S230).

The authentication server 300 transmits a previous-registration notification signal to the user terminal 100 (S235).

When the previous-registration notification signal is received, the user terminal 100 receives an input of PIN information from the user (S240) and acquires the PIN information (S245). For example, the user terminal 100 may provide a PIN information input UI to the user, the user may input the PIN information using the PIN information input UI, and the user terminal 100 may acquire the PIN information using the PIN information input UI.

The user terminal 100 acquires terminal identification information (S250) and transmits additional authentication information including the terminal identification information and the PIN information to the authentication server 300 (S255).

The authentication server 300 finds terminal identification information and PIN information for the UID (S260).

The authentication server 300 determines whether the terminal identification information included in the additional authentication information matches the found terminal identification information (S262). When the terminal identification information matches, the authentication server 300 determines whether the PIN information included in the additional authentication information matches the found PIN information (S264).

When it is determined that both the terminal identification information and the PIN information match, the authentication server 300 generates second personal identification authentication text (S270). The second personal identification authentication text may include first personal information, a UID, and information indicating whether the terminal identification information matches.

The authentication server 300 transmits the second personal identification authentication text to the card information server 500 (S272). The card information server 500 determines whether the second personal identification authentication text is valid (S274). When it is determined that the second personal identification authentication text is valid, the card information server 500 finds second personal information of a card holder indicated by the second personal identification authentication text (S276) and the card information server 500 transmits a verification success signal including the found second personal information to the authentication server 300 (S278). When it is determined that the second personal identification authentication text is not valid, the card information server 500 may transmit a verification failure signal to the authentication server 300.

When the verification success signal is received, the authentication server 300 compares the second personal information included in the verification success signal with third personal information collected and managed by the authentication server 300 and determines whether the second personal information matches the third personal information (S280). When it is determined that the second personal information matches the third personal information, the authentication server 300 generates authentication success information (S282). The authentication server 300 transmits an authentication success signal including the authentication success information to the user terminal 100 (S284).

When the authentication success signal is received, the user terminal 100 re-identifies whether authentication has succeeded (S290). When the authentication is successful, the user terminal 100 stores the authentication success information included in the authentication success signal (S292) and the user terminal 100 ends the authentication procedure (S294).

Although not illustrated in FIG. 7, the authentication server 300 may transmit an authentication failure signal to the user terminal 100 when the verification failure signal is received from the card information server 500, when it is determined that the terminal identification information or PIN information does not match, or when it is determined that the personal information does not match. When the authentication failure signal is received, the user terminal 100 may determine that the user authentication has failed and end the authentication procedure.

If an unregistered user is successfully authenticated and PIN information and terminal identification information are registered in association with the UID as described with reference to FIGS. 6 and 7, the UID, the PIN information, and the terminal identification information are used when the pre-registered user is authenticated and therefore it is possible to reduce a frequency at which the first card information and the second card information are exposed to transmission. Therefore, it is possible to more securely and easily perform authentication.

It will be apparent to those skilled in the art that various modifications can be made to the above-described exemplary embodiments of the present invention without departing from the spirit or scope of the invention. Thus, it is intended that the present invention covers all such modifications provided they come within the scope of the appended claims and their equivalents.

## Claims

1. An authentication method comprising:
receiving an authentication request signal including a unique identifier (UID) and first card information of a financial card and first personal information of a user of the financial card;
determining whether the user identified by the UID is a pre-registered user;
authenticating and registering the user based on the UID and the first card information when a determination result indicates that the user is not registered; and
authenticating the user based on the UID when the determination result indicates that the user is pre-registered.

2. The authentication method according to claim 1, wherein the first card information is acquired from the financial card using a contact scheme or a non-contact scheme and includes a card number and a valid period of the financial card.

3. The authentication method according to claim 1, wherein second card information is acquired from the user of the financial card and includes at least one of a password of the financial card and a card verification code (CVC) of the financial card.

4. The authentication method according to claim 1, wherein the first personal information is information about the user acquired from the user of the financial card and includes the user's name.

5. The authentication method according to claim 1, wherein the authenticating and registering of the user when the user is not registered includes:
transmitting a non-registration notification signal as a response to the reception of the authentication request signal;
receiving second card information as a response to the transmission of the non-registration notification signal;
transmitting first personal identification authentication text including the first personal information, the first card information, the second card information, and the UID;
receiving a personal identification result including second personal information as a response to the first personal identification authentication text;
comparing the second personal information with pre-stored third personal information when the personal identification result indicates success;
transmitting an authentication success signal including authentication success information when the comparison result indicates that the information matches;
receiving registration information including terminal identification information and personal identification number (PIN) information as a response to the transmission of the authentication success signal; and
storing the terminal identification information and the PIN information in association with the UID.

6. The authentication method according to claim 5, further comprising:
before the first personal identification authentication text is transmitted,
determining whether the first card information is encrypted in a secure application module (SAM) scheme; and
transmitting a decryption request signal including the first card information, to an SAM server when it is determined that the first card information is encrypted to receive decrypted first card information as a response to the transmission,
wherein the first personal identification authentication text further includes the decrypted first card information and information indicating whether the SAM scheme is applied.

7. The authentication method according to claim 6,
wherein the encrypted first card information includes an encrypted card number indicating a card number of the financial card and an encrypted valid period indicating a valid period of the financial card, and
wherein the decrypted first card information includes a card number and a valid period in unencrypted plaintext of the financial card.

8. The authentication method according to claim 5, wherein the second personal information includes the user's name and personal unique identification information registered in association with the financial card identified by the UID, the first card information, and the second card information.

9. The authentication method according to claim 1, wherein the authenticating of the user when the user is pre-registered includes:
transmitting a previous-registration notification signal as a response to the reception of the authentication request signal;
receiving additional authentication information including PIN information and terminal identification information as a response to the transmission of the previous-registration notification signal;
finding registered terminal identification information and registered PIN information stored in association with the UID;
determining whether the terminal identification information matches the registered terminal identification information and whether the PIN information matches the registered PIN information;
transmitting second personal identification authentication text including the first personal information, the UID, and information indicating whether the terminal identification information matches when a determination result indicates that both the terminal identification information and the PIN information match;
receiving a personal identification result including second personal information as a response to the transmission of the second personal identification authentication text;
determining whether the second personal information matches pre-stored third personal information when the personal identification result indicates success; and
transmitting an authentication result including authentication success information when a determination result indicates that the second personal information matches the pre-stored third personal information.

10. An authentication method using a terminal, the authentication method comprising:
acquiring a UID and first card information from a physical financial card using a contact or non-contact scheme;
acquiring first personal information including a name of a user of the financial card;
transmitting an authentication request signal including the first personal information, the UID, and the first card information;
receiving a previous-registration notification signal or a non-registration notification signal as a response to the transmission of the authentication request signal;
performing an unregistered user authentication procedure when the non-registration notification signal is received; and
performing a pre-registered user authentication procedure when the previous-registration notification signal is received.

11. The authentication method using the terminal according to claim 10, wherein the performing of the unregistered user authentication procedure includes:
acquiring second card information including a password or a CVC of the physical financial card;
transmitting the second card information as a response to the reception of the non-registration notification signal;
receiving an authentication success signal or an authentication failure signal as a response to the transmission of the second card information; and
storing authentication success information included in the authentication success signal when the authentication success signal is received, acquiring terminal identification information and PIN information, and transmitting registration information including the acquired terminal identification information and PIN information.

12. The authentication method using the terminal according to claim 10, wherein the performing of the pre-registered user authentication procedure includes:
acquiring the PIN information and the terminal identification information;
transmitting additional authentication information including the acquired PIN information and terminal identification information as a response to the reception of the previous-registration notification signal;
receiving an authentication success signal or an authentication failure signal as a response to the transmission of the additional authentication information; and
storing authentication success information included in the authentication success signal when the authentication success signal is received.

13. An authentication server comprising:
an authentication request processing unit configured to receive an authentication request signal including a UID and first card information of a financial card and first personal information of a user of the financial card and determines whether the user identified by the UID is a registered user;
an unregistered user authenticating unit configured to authenticate and register the user based on the UID and the first card information when a determination result of the authentication request processing unit indicates that the user is not registered; and
a pre-registered user authenticating unit configured to authenticate the user based on the UID when the determination result of the authentication request processing unit indicates that the user is pre-registered,
wherein the unregistered user authenticating unit includes:
a non-registration notification module configured to transmit a non-registration notification signal as a response to the reception of the authentication request signal and receive second card information as a response to the transmission of the non-registration notification signal;
a card verifying module configured to transmit first personal identification authentication text including the first personal information, the first card information, the second card information, and the UID and receive a personal identification result including second personal information as a response to the transmission of the first personal identification authentication text;
an unregistered user identifying module configured to compare the second personal information with pre-stored third personal information when the personal identification result indicates success and transmit an authentication success signal including authentication success information when the comparison result indicates that the second personal information matches the pre-stored third personal information; and
a user registering module configured to receive registration information including terminal identification information and PIN information as a response to the transmission of the authentication success signal and store the received terminal identification information and PIN information in association with the UID, and
wherein the pre-registered user authenticating unit includes:
a previous-registration notification module configured to transmit a previous-registration notification signal as a response to the reception of the authentication request signal and receive additional authentication information including PIN information and terminal identification information as a response to the transmission of the previous-registration notification signal;
a registration information identifying module configured to find registered terminal identification information and registered PIN information stored in association with the UID and determine whether the received terminal identification information matches the registered terminal identification information and whether the received PIN information matches the registered PIN information; and
a pre-registered user identifying module configured to transmit second personal identification authentication text including the first personal information, the UID, and information indicating whether the terminal identification information matches when the registration information identifying module determines that both the terminal identification information and the PIN information match, receive a personal identification result including second personal information as a response to the transmission of the second personal identification authentication text, determine whether the second personal information matches pre-stored third personal information when the personal identification result indicates success; and transmit an authentication success signal including authentication success information when a determination result indicates that the second personal information matches the pre-stored third personal information.

14. The authentication server according to claim 13,
wherein the unregistered user authenticating unit further includes an SAM processing module configured to determine whether the first card information is encrypted in an SAM scheme and transmit a decryption request signal including the first card information to an SAM server when it is determined that the first card information is encrypted to receive decrypted first card information as a response to the transmission, and
wherein the card verifying module transmits the first personal identification authentication text further including the decrypted first card information received by the SAM processing module and information indicating whether the SAM scheme is applied.

15. An authentication terminal using a physical financial card, the authentication terminal comprising:
a first card information acquiring unit configured to acquire a UID and first card information from the physical financial card using a contact or non-contact scheme;
a first personal information acquiring unit configured to acquire first personal information including a name of a user of the physical financial card;
an authentication requesting unit configured to transmit an authentication request signal including the first personal information, the UID, and the first card information;
a registration notification receiving unit configured to receive a previous-registration notification signal or a non-registration notification signal as a response to the transmission of the authentication request signal;
an unregistered user authentication processing unit configured to perform an unregistered user authentication procedure when the non-registration notification signal is received; and
a pre-registered user authentication processing unit configured to perform a pre-registered user authentication procedure when the previous-registration notification signal is received,
wherein the unregistered user authentication processing unit includes:
a second card information acquiring module configured to acquire second card information including a password or a CVC of the physical financial card and transmit the second card information as a response to the reception of the non-registration notification signal;
an unregistered user authentication receiving module configured to receive an authentication success signal or an authentication failure signal as a response to the transmission of the second card information;
an unregistered user authentication storing module configured to store authentication success information included in the authentication success signal when the authentication success signal is received; and
a registration information transmitting module configured to acquire terminal identification information and PIN information when the authentication success signal is received and transmit registration information including the acquired terminal identification information and PIN information, and
wherein the pre-registered user authentication processing unit includes:
an additional authentication information transmitting module configured to acquire the PIN information and the terminal identification information as a response to the reception of the previous-registration notification signal and transmit additional authentication information including the acquired PIN information and terminal identification information;
a pre-registered user authentication receiving module configured to receive an authentication success signal or an authentication failure signal as a response to the transmission of the additional authentication information; and
a pre-registered user authentication storing module configured to store authentication success information included in the authentication success signal when the authentication success signal is received.
